(19) Europäisches Patentamt
European Patent Office
Office européen des brevets

(11) EP 4 224 910 A1

(12) EUROPEAN PATENT APPLICATION
published in accordance with Art. 153(4) EPC

(43) Date of publication:
09.08.2023 Bulletin 2023/32

(51) International Patent Classification (IPC):
H04W 24/02 (2009.01)     H04W 40/02 (2009.01)
H04W 52/02 (2009.01)     H04W 92/20 (2009.01)

(21) Application number: 21885599.7

(22) Date of filing: 23.06.2021

(52) Cooperative Patent Classification (CPC):
H04W 24/02; H04W 40/02; H04W 52/02;
H04W 92/20; Y02D 30/70

(86) International application number:
PCT/JP2021/023863

(87) International publication number:
WO 2022/091476 (05.05.2022 Gazette 2022/18)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 29.10.2020 JP 2020181832

(71) Applicant: Panasonic Holdings Corporation
Osaka 571-8501 (JP)

(72) Inventors:
• KUBOTA, Kenichi
Kadoma-shi, Osaka 571-0057 (JP)
• ASANO, Hiroaki
Kadoma-shi, Osaka 571-0057 (JP)
• OKUDA, Masahisa
Kadoma-shi, Osaka 571-0057 (JP)

(74) Representative: Eisenführ Speiser
Patentanwälte Rechtsanwälte PartGmbB
Postfach 10 60 78
28060 Bremen (DE)

(54) NETWORK CONTROL DEVICE, NETWORK CONTROL SYSTEM, NETWORK CONTROL METHOD, AND WIRELESS NETWORK SYSTEM CONSTRUCTION METHOD

(57) [Task]
In a "local production for local consumption" network including a backhaul line formed by wireless multi-hop communication between a plurality of base stations, and a plurality of local service servers, communication speed is increased by appropriately selecting communication routes between the user terminals and the local service servers, and the power efficiency of the wireless communication by minimizing the power consumption of the overall system.
[Means]
A network control server 4 collects information regarding the user terminals 5, the access points 2, and the local service servers 3, sets communication routes between the user terminals and the local service servers, groups of the base stations, those of the existing base stations that are active, and those of the existing local service servers that are active so as to optimize a power efficiency of the overall network according to the collected information, and notifies the base stations, the local service servers or the user terminals of route information regarding the communication routes, and power control information that commands activation and deactivation of the base stations or the local service servers.

Fig.1

**Description**

TECHNICAL FIELD

The present disclosure relates to a network control device, a network control system, a network control method, and a wireless network system construction method for controlling communication routes in a network.

BACKGROUND ART

In the field of mobile networks, 5G (5th generation mobile communication system) is in the stage of commercialization. In 5G, since the frequencies that are used are high, and the service area of each base station is small, there is a need to deploy base stations at a higher density. Therefore, it is conceivable to construct a network of backhaul lines by wireless multi-hop communication between a plurality of base stations.

In an environment where a wired communication route is prerequisite for each backhaul line, the communication route is fixed, and cannot be freely changed. On the other hand, in a backhaul network configured by wireless multi-hop communication, communication routes can be freely changed. In this conjunction, there is known a technique for flexibly constructing a communication route in a network of backhaul lines configured by wireless multi-hop communication (multistage wireless relay) according to changes in the environment (see Patent Document 1).

PRIOR ART DOCUMENT(S)

PATENT DOCUMENT(S)

Patent Document 1: WO2018/096839A

SUMMARY OF THE INVENTION

TASK TO BE ACCOMPLISHED BY THE INVENTION

Mobile communication services based on the principle of "local production for local consumption" are attracting attention; demands generated in a certain area are supplied within that area. A "local production for local consumption" mobile communication service can reduce delays and minimize traffic. Also, a "local production for local consumption" 5G mobile communication service or a so-called local 5G, has been proposed.

In a "local production for local consumption" mobile communication service, a local service server that provides services to user terminals is provided in each base station. However, according to the prior art described above, no consideration is given to the positioning of a local service server (MEC server). Therefore, the prior art described above has a problem that a communication route connecting the user terminals and the local service servers cannot be appropriately selected.

In addition, even in a backhaul network based on wireless multi-hop communication between multiple base stations, it is necessary to improve the communication speed of user terminals while reducing (or not increasing) the power consumption of the entire network. In other words, improving power efficiency is strongly desired. The prior art fails to consider any improvement in the power efficiency of the entire network. The power efficiency can be expressed by the following formula, for example.

$$\text{Power efficiency [Mbit/Joule]}$$

$$= \{\text{Total terminal communication speed [Mbps]}\}$$

$$/ \{\text{Power consumption of entire system [W]}\}$$

In view of this background, a primary object of the present invention is to provide a network control device, a network control system, a network control method, and a wireless network system construction method for controlling communication routes in a "local production for local consumption" network that includes back haul lines formed by wireless multi-hop communication containing a plurality of base stations and a local service server, wherein the communication speed of user terminals can be increased by appropriately selecting the communication route between the user terminals and the local service server, and the power consumption of the overall system can be reduced, or the power efficiency of the wireless network system can be improved.

MEANS TO ACCOMPLISH THE TASK

The present disclosure is related to a network control device for a network including a plurality of local service servers, and backhaul lines formed by wireless multi-hop communication between a plurality of base stations, the network control device being provided with a processor for executing a process for controlling a communication route between user terminals and the local service servers, wherein the processor is configured to collect information regarding the user terminals, the base stations, and the local service servers, to set communication routes between the user terminals and the local service servers, groups of the base stations, those of the existing base stations that are active, and those of the existing local service servers that are active so as to optimize a power efficiency of the overall network according to the collected information, and to notify the base stations, the local service servers or the user terminals of route information regarding the communication routes, and power control information that commands activation and deactivation of the base stations or the local service servers.

The network control system of the present disclosure includes the network control device defined above, the base stations, and one or more of the local service servers.

The present disclosure is further related to a network control method for a network including a plurality of local service servers, and backhaul lines formed by wireless multi-hop communication between a plurality of base stations, the network control device being provided with a processor for executing a process for controlling a communication route between user terminals and the local service servers, wherein the processor is configured to collect information regarding the user terminals, the base stations, and the local service servers, to set communication routes between the user terminals and the local service servers, groups of the base stations, those of the existing base stations that are active, and those of the existing local service servers that are active so as to optimize a power efficiency of the overall network according to the collected information, and to notify the base stations, the local service servers or the user terminals of route information regarding the communication routes, and power control information that commands activation and deactivation of the base stations or the local service servers.

The present disclosure is further related to a method for constructing a wireless network system using an information processing device that executes a process for constructing a network system including backhaul lines formed by wireless multi-hop communication between a plurality of base stations, and a plurality of local service servers, wherein the information processing device is configured to collect information regarding the user terminals, the base stations, and the local service servers, and to set an arrangement of the local service servers so as to optimize a power efficiency of the overall network according to the collected information.

As can be appreciated from the present disclosure, the network control device controls the communication routes connecting user terminals and local service servers, the activation / deactivation of the existing base stations, and the activation / deactivation of the existing local service servers so as to improve the power efficiency of the entire network. Thereby, the communication routes connecting the user terminals and local service servers can be appropriately selected so that the communication speed of the user terminals can be increased, the power consumption of the entire system can be reduced, and the power efficiency of wireless communication can be improved.

BRIEF DESCRIPTION OF THE DRAWING

FIG. 1 is a view showing an overall structure of the wireless network system according to an embodiment of the present invention;
FIG. 2 is an explanatory diagram showing a typical arrangement of access points 2 and local service servers 3;
FIG. 3 is a block diagram showing a simplified overall structure of the network control server 4;
FIG. 4 is a flowchart showing an operation routine of the network control server 4;
FIG. 5 is a flowchart showing a process routine of the network control server 4;
FIG. 6 is a diagram showing the elements of a routing table used for the route control of backhaul lines;
FIG. 7 is diagrams showing examples of the configuration of the target network;
FIG. 8 is diagrams showing examples of adjacency matrices for route costs used in the route control of the network control server 4;
FIG. 9 is diagrams and a graph showing the effect of grouping the access points 2;
FIG. 10 is graphs showing examples of the data traffic and power efficiency in a target network having a typical configuration (which include six access points 2);
FIG. 11 is graphs showing examples of the data traffic and power efficiency in a target network having a typical configuration (which include nine access points 2);
FIG. 12 is explanatory diagrams showing different examples of the target network (where the number of the access points 2 is reduced from nine to seven); and

FIG. 13 is a graph showing typical values of the data traffic and power efficiency for the various configurations shown in FIG. 12.

DESCRIPTION OF THE PREFERRED EMBODIMENT(S)

To accomplish the task mentioned above, a first aspect of the present invention provides a network control device for a network including a plurality of local service servers, and backhaul lines formed by wireless multi-hop communication between a plurality of base stations, the network control device being provided with a processor for executing a process for controlling a communication route between user terminals and the local service servers, wherein the processor is configured to collect information regarding the user terminals, the base stations, and the local service servers, to set communication routes between the user terminals and the local service servers, groups of the base stations, those of the existing base stations that are active, and those of the existing local service servers that are active so as to optimize a power efficiency of the overall network according to the collected information, and to notify the base stations, the local service servers or the user terminals of route information regarding the communication routes, and power control information that commands activation and deactivation of the base stations or the local service servers.

According to this aspect of the present invention, the network control device controls the communication routes connecting user terminals and local service servers, the activation / deactivation of the existing base stations, and the activation / deactivation of the existing local service servers so as to improve the power efficiency of the entire network. Thereby, the communication routes connecting the user terminals and local service servers can be appropriately selected so that the communication speed of the user terminals can be increased, the power consumption of the entire system can be reduced, and the power efficiency of the entire system can be improved.

According to a second aspect of the present invention, the processor is configured to obtain the power efficiency of the overall network based on a traffic situation in the backhaul lines.

According to this aspect, the power efficiency of the entire target network can be obtained appropriately according to the status of data traffic (communication data size of the user terminals).

A third aspect of the present invention provides a network control system comprising the network control device, the base stations, and one or more of the local service servers.

According to this aspect of the present invention, similarly to the first aspect of the present invention, the communication routes connecting the user terminals and local service servers can be appropriately selected so that the communication speed of the user terminals can be increased, the power consumption of the entire system can be reduced, and the power efficiency of the entire system can be improved.

Further, a fourth aspect of the present invention provides a network control method for a network including a plurality of local service servers, and backhaul lines formed by wireless multi-hop communication between a plurality of base stations, the network control device being provided with a processor for executing a process for controlling a communication route between user terminals and the local service servers, wherein the processor is configured to collect information regarding the user terminals, the base stations, and the local service servers, to set communication routes between the user terminals and the local service servers, groups of the base stations, those of the existing base stations that are active, and those of the existing local service servers that are active so as to optimize a power efficiency of the overall network according to the collected information, and to notify the base stations, the local service servers or the user terminals of route information regarding the communication routes, and power control information that commands activation and deactivation of the base stations or the local service servers.

Thereby, similarly to the first aspect of the present invention, the communication routes connecting the user terminals and local service servers can be appropriately selected so that the communication speed of the user terminals can be increased, the power consumption of the entire system can be reduced, and the power efficiency of the entire system can be improved.

Further, a fifth aspect of the present invention provides a method for constructing a wireless network system using an information processing device that executes a process for constructing a network system including backhaul lines formed by wireless multi-hop communication between a plurality of base stations, and a plurality of local service servers wherein the information processing device is configured to collect information regarding the user terminals, the base stations, and the local service servers, and to set an arrangement of the local service servers so as to optimize a power efficiency of the overall network according to the collected information.

Thereby, the positioning of the local service server can be optimized. More specifically, the local service servers can be installed at the optimum locations. As a result, the number of local service servers to be installed can be minimized so that the power consumption of the entire system can be reduced, and the power efficiency can be improved. Further, the costs for system installation and operation can be reduced.

An embodiment of the present invention will be described in the following with reference to the appended drawings.

(First embodiment)

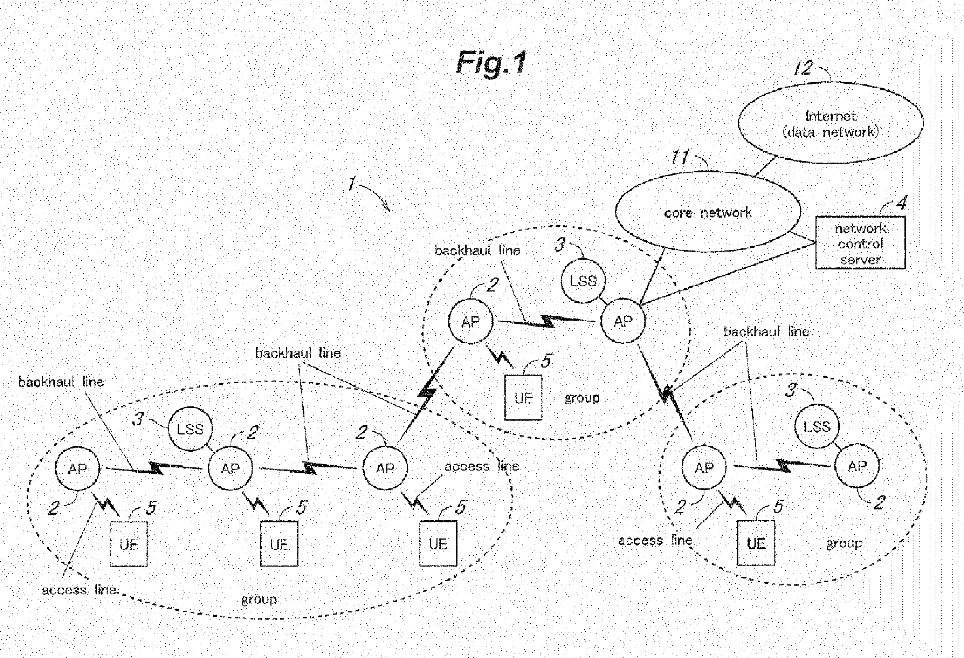

Fig. 1 is an overall configuration diagram of a wireless network system according to this embodiment.

The wireless network system 1 (network control system) includes access points 2 (base stations), local service servers 3, a network control server 4 (network control device), and user terminals 5.

Each access point 2 is connected to the corresponding user terminals 5 through access lines based on a 5G wireless communication system. Also, each access point 2 is connected to the adjacent access points 2 via backhaul lines. A backhaul line network is formed by multi-hop communication performed by the multiple access points 2 in such a manner that communication routes connecting the user terminals 5 to the local service servers 3 are formed.

Each local service server 3 provides services for so-called local 5G, and executes various applications (programs) related to the services provided to the user terminals 5 from a location physically close to the mobile user terminals 5. Although there are no particular restrictions on the positioning of each local service server 3, it is connected to one of the access points 2. The local service server 3 is also called an edge server or an MEC (Multi-access Edge Computing) server.

The network control server 4 stores information on the entire "local production for local consumption" wireless network system 1. The network control server 4 may form a part of a core network 11 or may be connected to the Internet 12 so as to connect the backhaul lines between the access points 2 to the Internet 12 (data network) in cooperation with the core network 11.

The network control server 4 controls the communication routes formed by the backhaul lines connecting the user terminals 5 to the local service servers 3. The network control server 4 also collects information on the user terminals 5, the access points 2, and the local service servers 3 from the access point 2 and manages the collected information for route control. More specifically, the information that is managed include the locations of the access points 2 and the local service servers 3, the connection statuses of the user terminals 5 and the backhaul lines, the power consumption of the access points 2 and the local service servers 3, among other pieces of information.

In addition, the network control server 4 notifies the access points 2 and the local service servers 3 of route information regarding the communication routes (communication routes) determined by the route control. Furthermore, in the present embodiment, the network control server 4 controls the operation status of the access points 2 and the local service servers 3 in conjunction with the route control, and notifies the access points 2 and the local service servers 3 of power control information regarding the activation / deactivation of the access points 2 and the local service servers 3 (or turns on / off the power supply of the related devices).

In addition, the network control server 4 groups the access points 2 according to the route control. More specifically, a number of access points 2 forming a communication route connecting a number of user terminals 5 to one local service server 3 are treated as one group (a group of access points 2). The network control server 4 notifies the access points 2 of information regarding the change in the grouping of the access points 2. In addition, the network control server 4 creates information (table) regarding the priority of the access points 2 to be connected to according to quality of service requests from the user terminals 5, and notifies the access points 2 of this information.

The user terminals 5 may consist of, for example, smartphones, tablet terminals, vehicles equipped a wireless communication function, or the like. Each user terminal 5 is connected to the corresponding access point 2 via an access line, and communicates with the local service server 3 via a backhaul line shared by a plurality of access points 2 to receive services of the local service server 3. Also, the user terminal 5 can use services on the Internet 12 (data network) via the backhaul lines and the core network 11.

Owing to the presence of the local service servers 3, and the core cooperating function of the network control server 4, this wireless network system 1 can operate jointly with the core network 11 that may contain Non-3GPP Access (such as WiGig (registered trademark) and WLAN) by using the technologies of N3IWF (Non-3GPP Interworking Function), TNAF/TNGF, and TWAF/TWIF.

Further, in this wireless network system 1, in addition to the routing control between the user terminals 5, the local service servers 3, and the Internet 12 (data network), information distribution services for distributing the information collected by the access points 2 to the user terminals 5 by Web API may be performed. More specifically, these services may be used for providing traffic information such as vehicle traffic volumes, traffic regulations, detour guidance information, road construction plans, etc. to the vehicle drivers, and may also be used for putting out public policy information related to city planning, disaster countermeasures, etc.

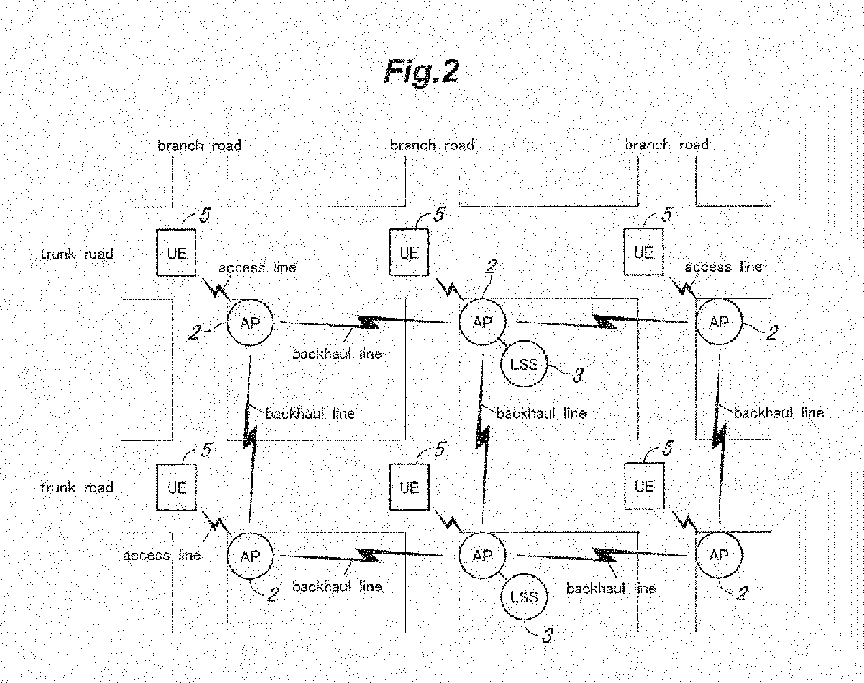

Next, the arrangement of the access points 2 and the local service servers 3 will be discussed in the following. FIG. 2 is an explanatory diagram showing an example of the arrangement of the access points 2 and the local service servers 3.

In the example shown in FIG. 2, the access points 2 (AP) are positioned at appropriate locations (for example, intersections) of a road network where branch roads intersect trunk roads. Some of the access points 2 are each connected to the corresponding local service server 3 (LSS). Each user terminal 5 (UE) on the road is connected to a nearby access point 2 via an access line. A backhaul line is formed between adjacent access points 2.

In this embodiment, the position, moving direction, and moving speed of each user terminal 5 on the road are numerically identified, and based on the moving routes of the user terminals 5, an intersecting road network is constructed, and a corresponding road traffic flow model is defined. This road traffic flow model is used to generate a traffic model for estimating the traffic situation of a target network (backhaul lines).

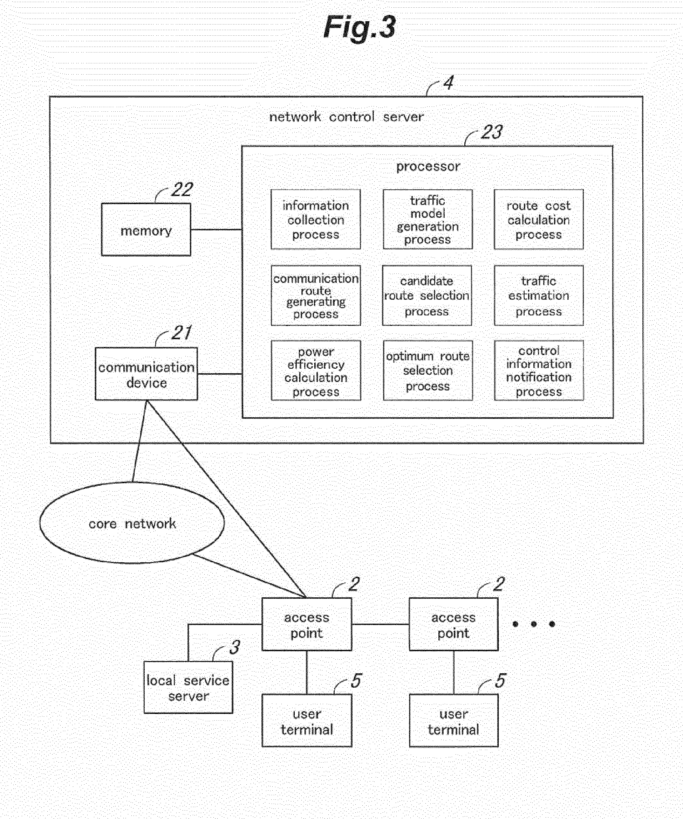

Next, an overall structure of the network control server 4 will be described in the following. FIG. 3 is a block diagram showing the overall structure of the network control server 4.

The network control server 4 includes a communication device 21, memory 22 and a processor 23.

The communication device 21 includes a communication circuit for communicating with the access points 2, the local service servers 3 and the user terminals 5 via the core network 11. The communication device 21 may also be connected to the access points 2 without going through the core network 11.

The memory 22 stores programs and the like executed by the processor 23. The memory 22 also stores database registration information. In this database, information on the user terminals 5, information on the arrangement of equipment (the access points 2 and local service servers 3), information on wireless transmission quality, information on data traffic and road traffic, information on communication routes, etc. are registered.

The processor 23 executes the programs stored in the memory 22 to perform various types of processing related to the route control of the backhaul line network. In this embodiment, the processor 23 performs information collection process, traffic model generation process, route cost calculation process, communication route generation process, candidate route selection process, traffic estimation process, power efficiency calculation process, optimum route selection process, control information notification process, etc.

In the information collection process, the processor 23 collects various types of information from the access points 2. For example, the information collected from the access points 2 include traffic status of the access lines and backhaul lines which may be in the form of user throughputs (communication speed), user data directions, communication volumes, priority, communication times, the numbers of connections of the user terminals 5, the MCS (Modulation and Coding Scheme) and the SINR (Signal to Interference plus Noise Ratio) of each access line, and the congestion status of the access lines and the backhaul lines. Information on the positions, directions and speeds of the user terminals 5 is also collected from the access points 2. Information on the location, power consumption, and processing load factor of each device (which may be an access point 2 or a local service server 3) is also collected from the access points 2. The collected information is registered in the database built in the network control server 4.

In the traffic model generation process, the processor 23 generates a traffic model for estimating the traffic condition of the target network (backhaul lines). This traffic model is generated based on traffic map data, installation information (location information) of the access points 2, and information on road traffic. At this time, the position, moving direction, and moving speed of each user terminal 5 are quantified, and an intersection road network is constructed based on the moving route of the user terminals 5, thereby defining a road traffic flow model.

In the route cost calculation process, the processor 23 calculates the route cost (link cost) of the wireless link between each pair of adjacent access points 2. This route cost (link cost) is calculated based on the number of connected user terminals 5, the available bandwidth of the target network (backhaul lines), the delay, and the like. Also, the route cost of the entire communication route in the target network (backhaul lines) is calculated as the sum of the link costs.

In the communication route generation process, the processor 23 generates effective communication routes in the target network (backhaul lines). More specifically, the communication routes are generated as a tree structure stemming from the core network 11 based on the connection status (whether or not there is a wireless link) between the access points 2 constituting the target network and the location of the local service server 3 (the location of the access point 2 to which the local service server 3 is connected).

In the candidate route selection process, the processor 23 selects a candidate route as an optimum route candidate from among the available communication routes. In this candidate route, the access points 2 involved in multi-hop communication for the transmission of user data and the backhaul lines between them are defined, as well as the access points 2 and local service servers 3 to be operated.

Here, it may be arranged such that a setting table of candidate routes corresponding to the traffic conditions (traffic volumes) of the user terminals 5 is created in advance, and candidate routes are selected according to environmental conditions such as traffic conditions for each time band, weather, and accidents related to the user terminal 5. Thereby, the trouble of selecting candidate routes by a dynamic brute force approach can be avoided.

Also, in the candidate route selection process, a route that minimizes the route cost can be selected as the candidate route. At this time, the cost (link cost: link length) for each wireless link between access points 2 is set according to the available bandwidth and the number of connections of the user terminals 5. The shortest route from the user terminal 5 to the local service server 3 is obtained. More specifically, a minimum spanning tree, or a spanning tree that minimizes the route cost (sum of link costs) is obtained as a candidate route. At this time, for example, the total sum of link lengths (link costs) (the route cost of the entire communication route) can be used as an objective function, and the problem can be processed as a linear programming problem for minimizing the objective function.

Also, in the candidate route selection process, a route that maximizes the available bandwidth (total data flow rate, throughput) can be selected as a candidate route.

In the traffic estimation process, the processor 23 estimates the actual traffic situation in the target network (backhaul lines) for each candidate route by using a traffic model. At this time, information on wireless transmission and line connection of the target network is acquired, and based on the acquired information, the data traffic volume (communication speed) is estimated for each candidate route by using the traffic model. The data traffic volume may be estimated by taking the access lines between the user terminals 5 and the access points 2 into consideration.

In the power efficiency calculation process, the processor 23 calculates the power efficiency (consumed energy per unit amount of information) based on data traffic (total value of communication speed) for each candidate route. This power efficiency can be obtained by dividing the total value of the communication speed of user terminals by the power consumption of the entire target network, as can be represented by the following formula.

$$\text{Power efficiency [Mbit/Joule]}$$

$$= \{\text{Total value of communication speed [Mbps]}\}$$

$$/ \{\text{Power consumption of entire target network [W]}\}$$

Here, the power consumption of the entire target network is the total value of the power consumption of the devices (the access points 2 and the local service servers 3) operating within the target network. Therefore, when the numbers of active access points 2 and local service servers 3 decrease, the power consumption of the entire system decreases, resulting in a higher power efficiency.

In the optimum route selection process, the processor 23 compares the power efficiency of each candidate route and selects the candidate route that maximizes the power efficiency as the optimum route. At this time, it is determined which of the access points 2 and local service servers 3 are to be activated, and the access points 2 and local service servers 3 that are not included in the optimum route are excluded as those to be deactivated. Since the power efficiency changes according to the data traffic volume of the user terminals 5, the optimum route differs according to the data traffic volume of the user terminals 5.

Here, for example, when the number of hops (number of wireless links) of the target network (backhaul lines) is small and the throughput (total value of communication speed, amount of data traffic) is large, the power efficiency becomes high. Therefore, in the optimum route selection process, the optimum route can be derived as a linear programming problem that aims to maximize power efficiency through maximization of the throughput.

Also, in the optimum route selection process, a spanning tree routing protocol used in general route control may be adopted to minimize the route cost. In calculating the optimal route by using this routing protocol, in addition to the reciprocal ratio of communication speed (InvCap) and the number of hops (MinHop), which are generally used as the costs, or the route selection metrics between the access points, a weighted grouping approach is used. This routing protocol is easy to use owing to the robust practicality, and the possibility of quasi-static routing through distributed control, thereby contributing to the improvement of power efficiency with a light processing load.

In the control information notification process, the processor 23 transmits, as control information, route information regarding the communication route of the backhaul lines and power control information regarding activation/shutdown status of the devices (the access points 2 and the local service servers 3) to the access points 2 and the local service servers 3.

In the route control of the target network (backhaul lines) performed by the network control server 4, packet transfer technologies such as L2 switch and L3 switch, MPLS (Multi-Protocol Label Switching), and so on, and routing protocols such as OSPF (Open Shortest Path First), etc. may be utilized. In the route control, network slicing, 5G wireless QoS (Quality of Service) control and power control, and SGNR (New Wireless) base station communication distribution technology may be used as technologies related to the cooperation with the core network 11. Also, in the route control, 802.11s, WiFi (registered trademark) SON (Self-Organizing Network), etc. may be applied as technologies related to wireless mesh networks.

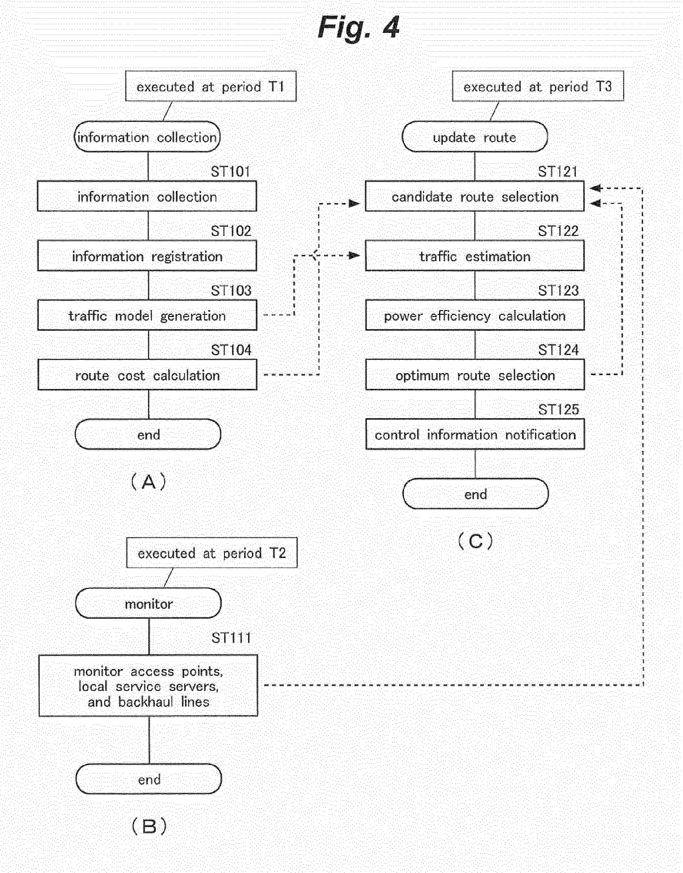

Next, the mode of operation of the network control server 4 will be described in the following. FIG. 4 is a flowchart showing the mode of operation of the network control server 4.

In the network control server 4, the information collection flow shown in FIG. 4(A) is cyclically executed at a period T1 (for example, 300 seconds).

In this control flow, first, the processor 23 collects predetermined information from the access points 2 (ST101). Next, the processor 23 registers the information collected from the access points 2 in the database (ST102). This database contains information on the user terminals 5 (positional information, etc.), information on the positioning of the devices (access points 2 and local service servers 3), information on wireless channel quality, information on data traffic and road traffic, and route information.

Next, the processor 23 generates a traffic model based on the traffic map data, position information of the access points 2, and information on road traffic (ST103).

Next, the processor 23 calculates the route costs (link cost) of the wireless links between adjacent access points 2 (ST104).

Each access point 2 collects predetermined information about itself, the user terminals 5, and the local service servers 3, and stores the collected information in its own memory 22, and transmits the information to the network control server 4 in response to a request from the network control server 4. Also, the information collection by each access point 2 is cyclically performed at a prescribed interval T0 (e.g., 60 seconds).

Also, in the network control server 4, the monitoring flow shown in FIG. 4(B) is cyclically executed at a prescribed interval T2 (for example, 10 minutes).

In this monitoring flow, the processor 23 monitors the access points 2, the local service servers 3, and the backhaul lines (ST111). In this monitoring process, congestion trends, equipment (access points 2 and local service servers 3) failures, user terminal 5 accidents, and the like are detected.

Further, in the network control server 4, the control flow relating to route update shown in FIG. 4(C) is cyclically executed at an interval T3 (for example, one hour). In addition, in the control flow shown in FIG. 4(B), when an environmental change such as a communication congestion tendency, a device failure (access points 2 and local service servers 3), a change in weather, or an accident related to the user terminals 5 is detected, the flow is started by an interrupt without waiting for the interval T3.

Further, in the present embodiment, for example, the process of predicting traffic conditions for each time zone such as morning, afternoon and evening is periodically executed, and the control flow for the process for updating the route may be started when a change in the traffic conditions for each time zone is acquired by the process of predicting traffic conditions.

In this flow, first, the processor 23 selects a candidate route as an optimum route candidate from the available communication routes (ST121). At this time, for example, a route that minimizes the route cost is selected as a candidate route. Note that the network control server 4 generates in advance available communication routes in the target network (backhaul lines).

Also, the processor 23 estimates the actual traffic status in the target network (backhaul lines) for the candidate route based on the traffic model, and acquires the communication data size (data traffic volume) (ST122).

Next, the processor 23 calculates the power efficiency for each candidate route based on the communication data size (data traffic volume) (ST123).

Next, processor 23 compares the power efficiency of each candidate route and selects the candidate route that maximizes the power efficiency as the optimum route (ST124).

Next, the processor 23 transmits, as control information, route information regarding the communication route of the backhaul line and power control information regarding activation / deactivation of the devices (the access points 2, or the local service servers 3) to the access points 2, the local service servers 3, or the user terminals 5 (ST125).

The access points 2 or local service servers 3 control the power consumption of the devices based on the notified power control information. Based on the notified route information, the user terminals 5 may reset the access points 2 and the local service servers 3 to be connected, or may dynamically set the communication route.

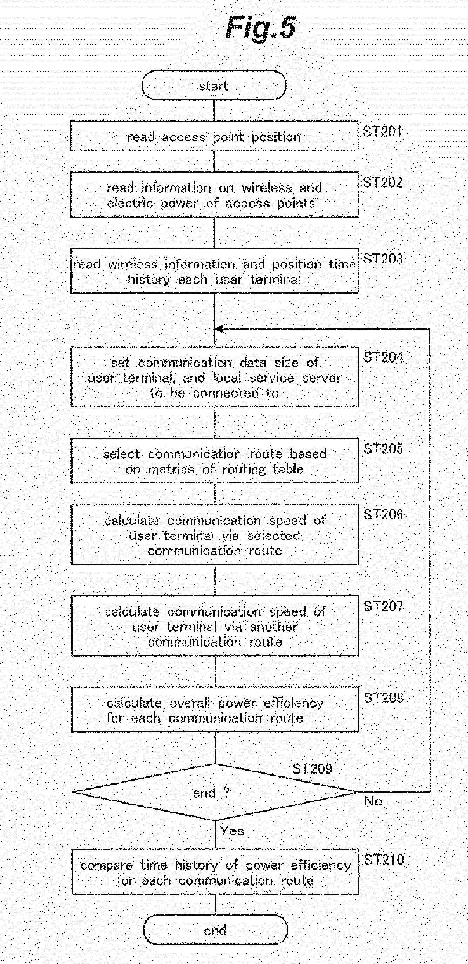

Next, a processing procedure performed by the network control server 4 will be described in the following. FIG. 5 is a flowchart showing the processing procedure performed by the network control server 4.

In the network control server 4, the processor 23 first reads the location information of the access points 2 from the memory 22 (ST201). The processor 23 also reads information about the wireless and power statuses of the access points 2 from the memory 22 (ST202). Further, the processor 23 reads the wireless status information of each user terminal 5 and the position information of each user terminal 5 at each time point from the memory 22 (ST203).

Next, the processor 23 sets the communication data size of the user terminal 5 and the local service server 3 to be connected (ST204). Next, the processor 23 selects a communication route based on the metric (priority of communication route) of the routing table (ST205). Next, the processor 23 calculates the communication speed of the user terminal 5 (speed of communication from the user terminal 5 to the local service server 3 to be connected) via a selected communication route (ST206). Next, the processor 23 calculates the communication speed of the user terminal 5 via another communication route (ST207). Next, the processor 23 calculates the power efficiency for each communication route from the communication speed and power consumption over the entire target network (ST208).

Next, the processor 23 determines if a predetermined termination condition is satisfied (ST209). At this time, the termination condition is satisfied when the communication route has the optimum power efficiency. The termination condition is satisfied also when the user terminal 5 has moved out of the target network.

Here, if the termination condition is satisfied (Yes in ST209), temporal transitions in communication speed for each communication route are compared (ST210). On the other hand, if the termination condition is not satisfied (No in ST209), the process returns to ST204, and the processor 23 repeats the process of setting the communication data size of the user terminal 5 and the local service server 3 to be connected.

It is also possible to create a pattern table of optimum communication routes which are derived in advance by taking into account the road traffic condition of the user terminal 5 so as to select a communication route according to environmental conditions such as the road traffic condition of the particular time zone, and environmental factors such as weather, and accidents. Thereby, the processing time can be shortened compared to the case where the communication route is calculated and the power efficiency is calculated each time as described above.

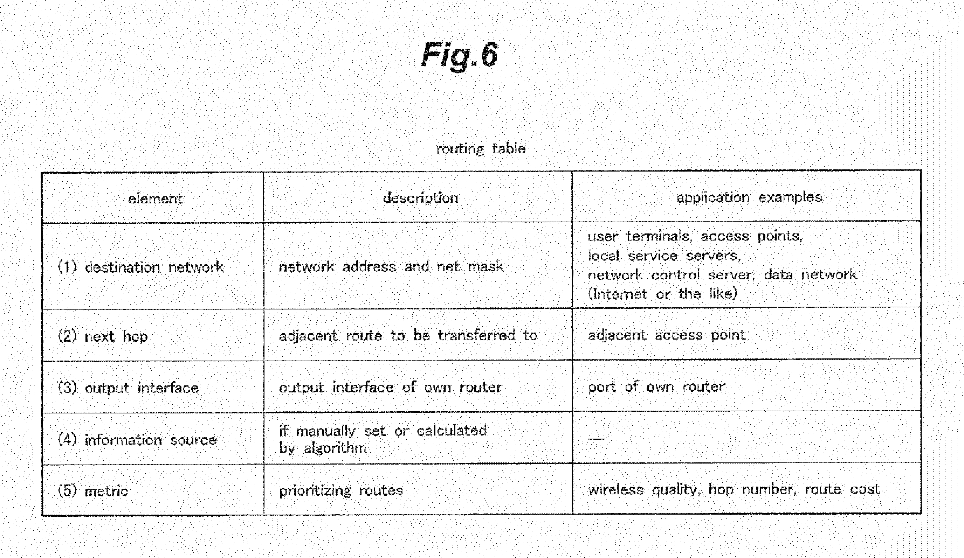

Next, the routing table used for route control of the backhaul lines will be described in the following. FIG. 6 is an explanatory diagram showing the various components of the routing table.

The network control server 4 creates a routing table (route table, route information) for use in the routing control for the backhaul lines. FIG. 6 is a diagram showing the elements of the routing table.

This routing table registers information about various elements such as the destination network, next hop, output interface, information source, and metric.

The destination network elements contain the network address and netmask information of the local service server 3 that provides services to the user terminal 5. The next hop elements contain information that defines to which of the next adjacent access points 2 the data should be transferred in order to reach the destination network. The output interface elements contain information related to the output interfaces of the devices (access points 2). More specifically, this information specifies for each access point 2 from which of the interfaces thereof the data should be outputted for the data to be transmitted to the access point 2 of the next hop. Each access point 2 may change the setting of the route configuration of the backhaul lines by up/down of the port of the antenna or the L2 switch. The information source elements contain information about the source of the information listed in the routing table. More specifically, this information specifies if the information source was manually set by the network administrator or calculated by the routing algorithm. The metric elements contain information regarding the priority assigned to each route when there are multiple routes to the same destination network. More specifically, this information specifies wireless quality, hop count, and route cost.

Here, in the present embodiment, the candidate route selection process in the route control of the backhaul lines can be performed by using a control system whereby the candidate route is selected firstly according to the wireless communication quality between the adjacent access points 2.

In the candidate route selection process, a control system that selects a route that minimizes the number of hops from the user terminal 5 to the local service server 3 (destination network) as a candidate route, such as a RIP (Routing Information Protocol) technology, may be used.

In the candidate route selection process, a control method that selects a route that minimizes the route cost (sum of link costs) of the entire target network (backhaul lines) as a candidate route such as an OSPF (Open Shortest Path First) technology may be used.

In this case, firstly, there is a scheme based on the available bandwidth of the wireless link between adjacent access points 2. For example, in the OSPF, routes with broader bandwidths are considered as being optimum since wider bandwidths mean lower route costs. Secondly, there is a scheme based on the number of user terminals 5 connected to the access line of each access point 2. Thirdly, there is a scheme based on the number of user terminals 5 using wireless links between adjacent access points 2. Fourthly, there is a scheme based on the available bandwidth of the wireless links that are being used between adjacent access points 2.

Regarding update timing, there are static control, proactive control (from 5 to 30 minutes), and reactive control (dynamic). Also, the second to fourth schemes improve the throughput by taking account load balance.

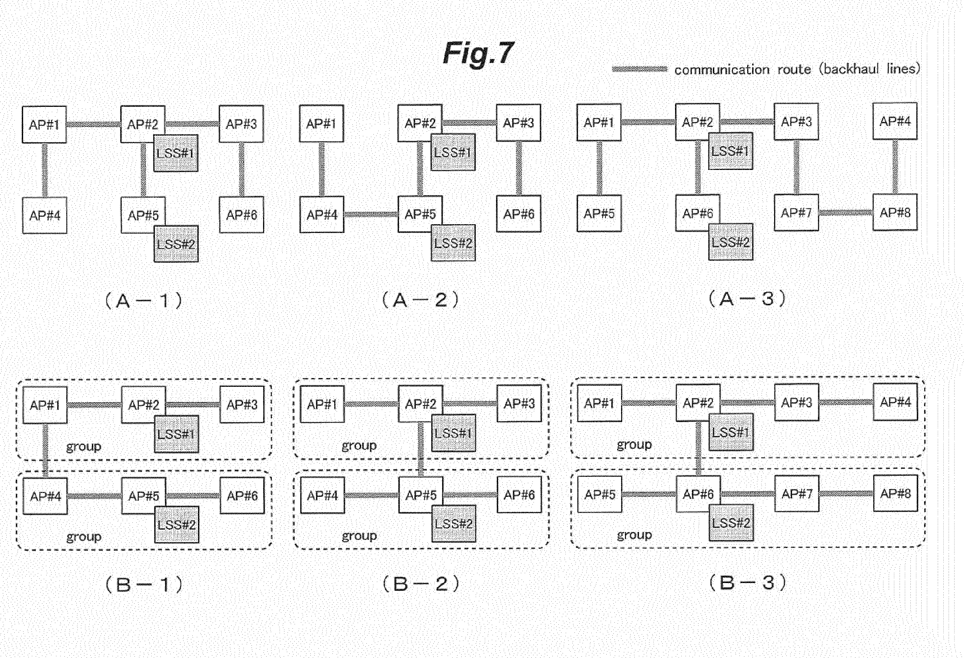

Next, the route cost in the target network (backhaul lines) will be discussed in the following. FIG. 7 is an explanatory diagram showing an example of the configuration of the target network.

The network control server 4 calculates the total route cost (link cost) of the wireless links between adjacent access points 2 for a target network (backhaul lines) which includes a plurality of access points 2. A communication route that minimizes the sum of the route costs is selected as the candidate route for the optimum route. Also, the communication route is set as a spanning tree (a state in which all branches and leaves are connected and there is no closed route). In other words, the spanning tree with the smallest sum of route costs (link costs) is selected as the candidate route.

The example shown in FIG. 7 is a case where six access points 2 are provided in the target network (backhaul lines).

In particular, the examples shown in FIGS. 7(A-1), (A-2), and (A-3) are cases in which the route cost is set as the reciprocal of the transmission band width of the backhaul line. In the case of the WiGig (registered trademark), for example, the route cost is 1 for the MCS 12 (MCS index is 12) communication method (maximum communication speed: 4,620 Mbps), is 2 for the route cost for the MCS8 communication method (maximum communication speed: 2,310 Mbps), and is 4 for the route cost for the MCS4 communication method (maximum communication speed: 1,155 Mbps).

On the other hand, the examples shown in FIGS. 7(B-1), (B-2), and (B-3) are cases where the access points 2 are grouped. In this case, the route cost is set as the reciprocal of the transmission band width of the backhaul line, and the route cost for the line between the groups is set to twice this value which corresponds to the ratio of the degrees of congestion of the line between the groups and the line within the group. This congestion degree ratio is an adjustable value, and the route cost is derived as the reciprocal ratio of the communication speed to the route cost. Therefore, in the case of a network topology with many congested sections, the route cost may be reset based on this congestion degree ratio. Grouping and weighting the routes to the local service servers 3 in this way makes it easier to select a route within the group, thereby improving throughput and power efficiency.

Also, the route cost may be set as the number of hops from the access point 2 to which the user terminal 5 is connected to the access point 2 to which the local service server 3 is connected. In this case, when there are six access points 2, the example shown in FIG. 7(B-2) is applicable, and when there are eight access points 2, the example shown in FIG. 7(B-3) is applicable. This setting configuration based on hop counts also contributes to the improvement of throughput and power efficiency as it reflects grouping in the cost.

Alternatively, a route cost may be set for each group of the access points 2, and the route cost of the overall communication route may be represented as a spanning tree by integrating the route costs for the different groups. This case is similar to the examples shown in FIGS. (7B-1), 7(B-2) and 7(B-3) where there are two spanning trees.

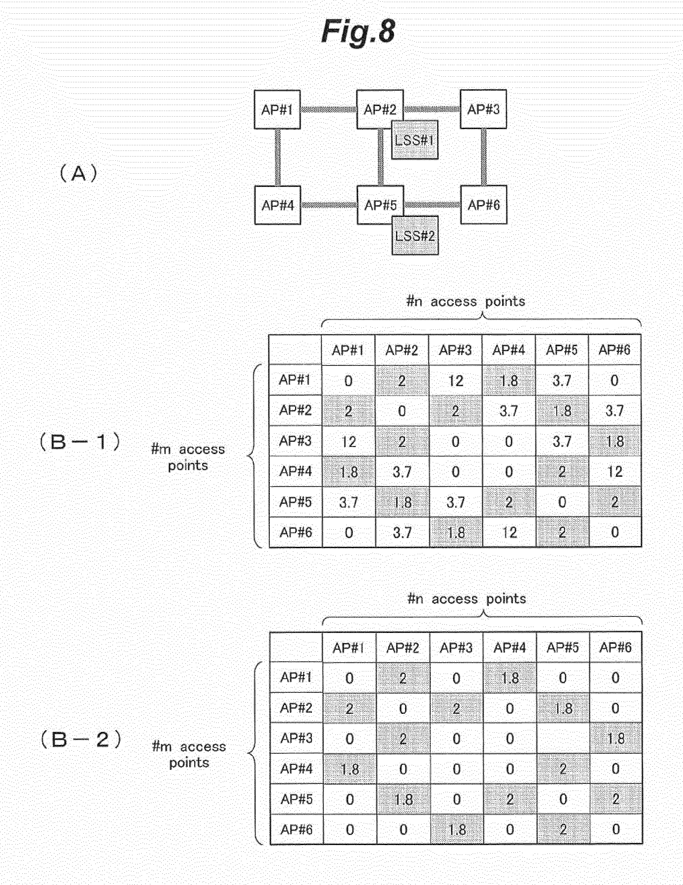

Next, an adjacency matrix of the route costs used for the route control of the network control server 4 will be described in the following. FIG. 8 is an explanatory diagram of an example of an adjacency matrix of route costs.

The network control server 4 calculates the route costs for the target network (backhaul lines), and selects the communication route that minimizes the sum of the route costs as a candidate route for the optimum route. At this time, the route costs are represented by the adjacency matrices shown in FIGS. 8(B-1) and (B-2). These adjacency matrices represent the MCS values between the #m access point 2 and the #n access point 2.

The example shown in FIG. 8(A) is a case where six access points 2 are provided in the target network (backhaul lines). In this case, 6×6 adjacency matrices are used as shown in FIGS. 8(B-1) and (B-2).

Also, here, the route cost is set as the reciprocal of the transmission band width of the target network (backhaul lines). For example, in WiGig (registered trademark), the route cost is 1 in the case of MCS12 (4,620 Mbps), the route cost is 2 in the case of MCS8 (2,310 Mbps), and the route cost is 4 in the case of MCS4.

Here, first, the MCS value (reciprocal of the line speed ratio) for the WiGig (registered trademark) communication system is set from the distance between the #m access point 2 and the #n access point 2. Also, when the access points 2 are the same (m=n), as there is no wireless link involved, the MCS value is set to "0".

In the example shown in FIG. 8 (A), each of the access points 2 (AP) #2 and #5 is connected to a local service server 3 (LSS). The upper limit of the number of lines is set assuming that the #1, #3, #4, and #6 access points 2 are located at the periphery of the target network (backhaul lines), and the #2 and #5 access points 2 are located in the middle of the target network.

In addition, with the number of lines of each access point 2 (each row) set as the upper limit, and those combinations with higher MCS values, or more specifically, those combinations up to the second smallest MCS values excluded, the MSC values are set to zero for other combinations. In the example shown in FIG. 8(B-1), the MCS values are " 1.8", "2", "3.7", and " 12", and in the example shown in FIG. 8(B-2), the combinations with the lower MCS values "3.7" and "12" are set to "0".

When the route cost adjacency matrix is set up in this way, the total route cost (link cost) of the wireless link between the adjacent access points 2 is calculated as the sum of the route costs (link costs) of the target network (backhaul lines) based on this adjacency matrix.

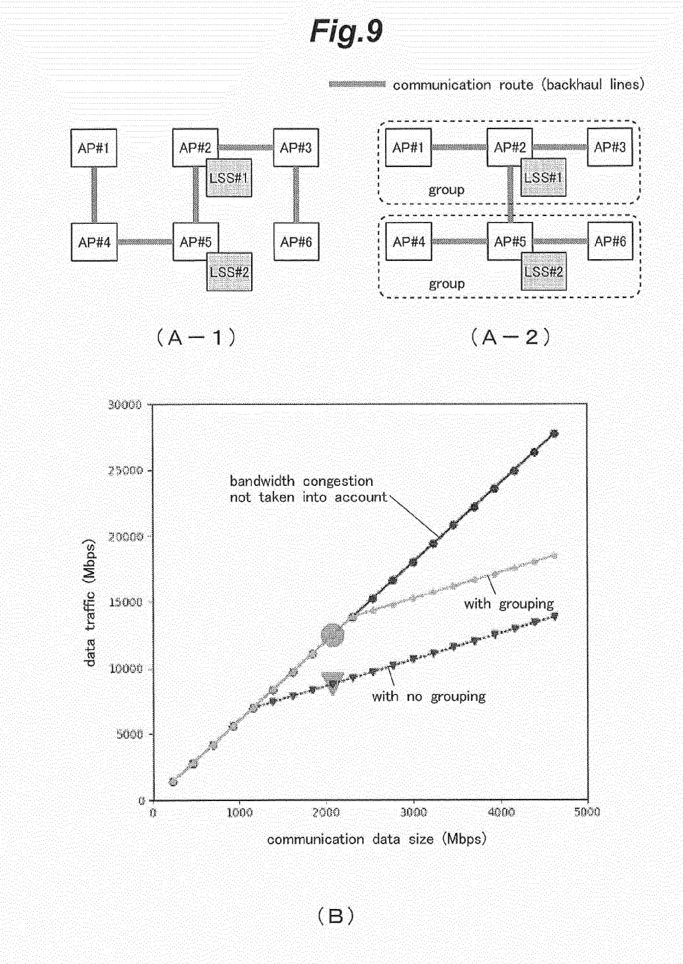

Next, grouping of the access points 2 will be discussed in the following. FIG. 9 is an explanatory diagram showing the difference depending on whether the access points 2 are grouped or not. FIGS. 9(A-1) and (9(A-2)) show examples of target network configurations. FIG. 9(B) is a graph showing an example of data traffic.

The access points 2 are grouped in the route control of the target network (backhaul lines). In this embodiment, the access points 2 and local service servers 3 that are activated are appropriately changed, and the grouping of the access points 2 is changed according to the change in the access points 2 and local service servers 3 that are activated.

Here, each group includes a plurality of access points 2 forming a communication route for connecting a user terminal 5 to a local service server 3, and more specifically includes an access point 2 to which the user terminal 5 is connected, an access point 2 to which a local service server 3 is connected, and an access point 2 that connects the two access points 2 by multi-hop communication.

FIGS. 9(A-1) and 9(A-2) are examples in which six access points 2 are provided in the target network (backhaul lines). Two out of the six access points 2 are each connected to a local service server 3. In the example shown in FIG. 9(A-1), a communication route, priority is given to a connection line, or more specifically, the route control is based on RSSI (Received Signal Strength Indicator). In this case, the access points 2 and the local service servers 3 are not grouped. On the other hand, in the example of communication routes shown in FIG. 9(A-2), the access points 2 and the local service servers 3 are grouped.

The horizontal axis of the graph shown in FIG. 9(B) represents the communication data size, or more specifically, the data size (Mbps) transmitted from the user terminal 5 to the access point 2. The vertical axis of the graph represents the data traffic (total communication speed) (Mbps) of the entire target network (backhaul lines). In this graph, the slope of the straight line representing the relationship between the communication data size and data traffic changes due to the influence of communication congestion.

From this graph, it can be seen that there is a difference by the factor of two in data traffic depending on if the access points 2 are grouped or not.

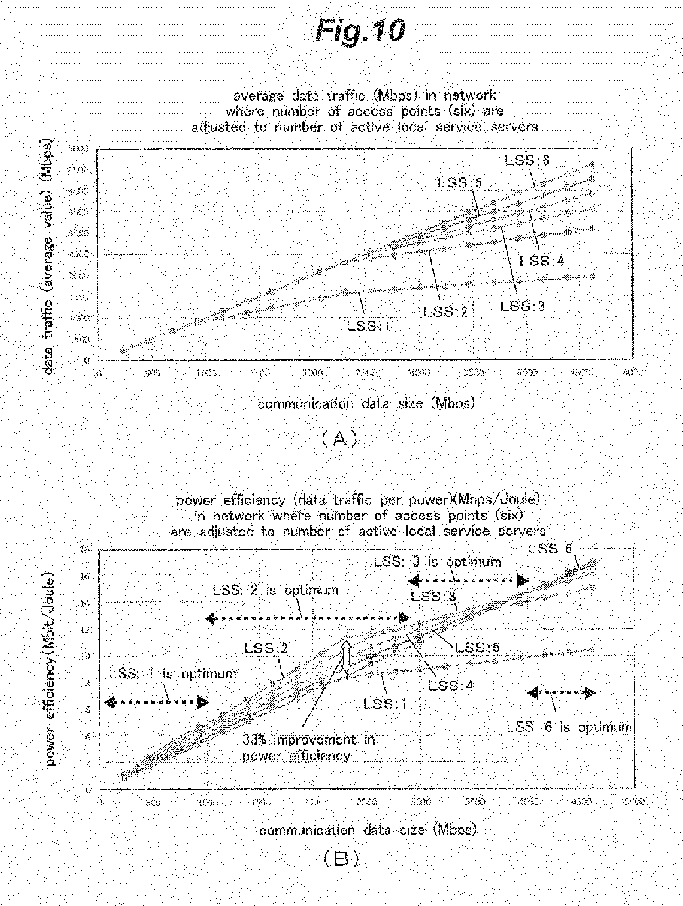

Next, an example of the form of the target network (when there are six access points 2) will be described in the following. FIG. 10 is a graph showing an example of data traffic and power efficiency.

In this embodiment, the route control is performed using the power efficiency of the entire target network (backhaul lines) as an index. More specifically, when the number of active access points 2 to which the user terminal 5 can connect is set to a predetermined number (for instance when all of the access points 2 are active), by using the number of the active local service servers as the variable, the power efficiency is compared according to the number of active local service servers 3. Then, the local service servers 3 are activated by the number that maximizes the power efficiency.

In the example shown in FIG. 10, six access points 2 are provided in the target network (backhaul lines). In this case, all of the access points 2 are activated, and the power efficiency is compared depending on how many of the six local service servers 3 (installed number) are activated.

The horizontal axis of the graph shown in FIG. 10(A) represents the communication data size, or more specifically the data size (Mbps) transmitted from the user terminal 5 to the access point 2 connected to the local service server 3. The vertical axis of the graph represents the average value (Mbps) of data traffic (total value of communication speed) of the entire target network (backhaul lines).

This graph shows that by increasing the number of active local service servers 3, the resulting reduction in congestion increases the data traffic (total value of communication speed) of the entire target network.

Meanwhile, the horizontal axis of the graph shown in FIG. 10(B) represents the communication data size (Mbps) as in the graph shown in FIG. 10(A). The vertical axis of the graph represents the power efficiency (Mbit/Joule) of the entire target network (backhaul lines).

From this graph, it can be seen that there are ranges in which the power efficiency is optimized when the number of local service servers 3 (LSS) is one, two, three, and six, respectively. Thus, the optimum number of active local service servers depends on the communication data size. Therefore, the power efficiency of the entire target network can be improved by using a control action that activates a suitable number of local service servers 3 depending on the communication speed (communication data size) that is actually used.

Also, when the number of active local service servers 3 is set to one third of the number of active access points 2, or when the number of active access points 2 is two, due to the influence of congestion, the power efficiency can be improved by 33% in the case.

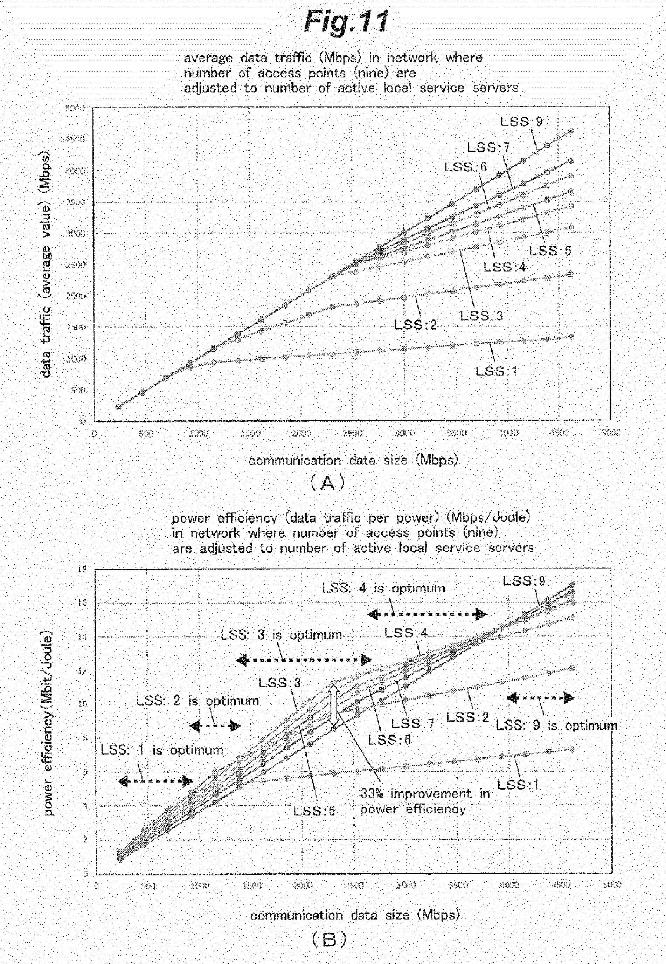

Next, an example of the configuration of the target network (which includes nine access points 2) will be described in the following. FIG. 11 is a graph showing an example of data traffic and power efficiency.

In the example shown in FIG. 11, nine access points 2 are provided in the target network (backhaul lines). In this case, all of the access points 2 are activated, and the power efficiency is compared depending how many of the nine local service servers 3 (installed number) are activated.

The horizontal axis and vertical axis of the graph shown in FIG. 11(A) respectively represent the communication data size (Mbps) and the average value (Mbps) of the data traffic (communication speed) over the entire target network (backhaul lines) as in the example shown in FIG. 11(A).

This graph shows that congestion can be reduced by increasing the number of active local service servers 3, and the resulting reduction in congestion increases the data traffic (total value of communication speed) of the entire target network.

Meanwhile, the horizontal axis and the vertical axis of the graph shown in FIG. 11(B) respectively represent the communication data size (Mbps) and the power efficiency (Mbit/Joule) of the entire target network (backhaul lines) as in the example shown in FIG. 10(B).

From this graph, it can be seen that there are ranges in which the power efficiency is optimized when the number of local service servers 3 (LSS) is one, two, three, four, and nine, respectively. Thus, the optimum number of active local service servers depends on the communication data size. Therefore, the power efficiency of the entire target network can be improved by using a control action that activates a suitable number of local service servers 3 depending on the communication speed (communication data size) that is actually used.

Also, similarly to the case where the number of active access points 2 is six, when the number of active local service servers 3 is set to one third of the number of active access points 2, or when the number of active access points 2 is three, due to the influence of congestion, the power efficiency can be improved by 33%.

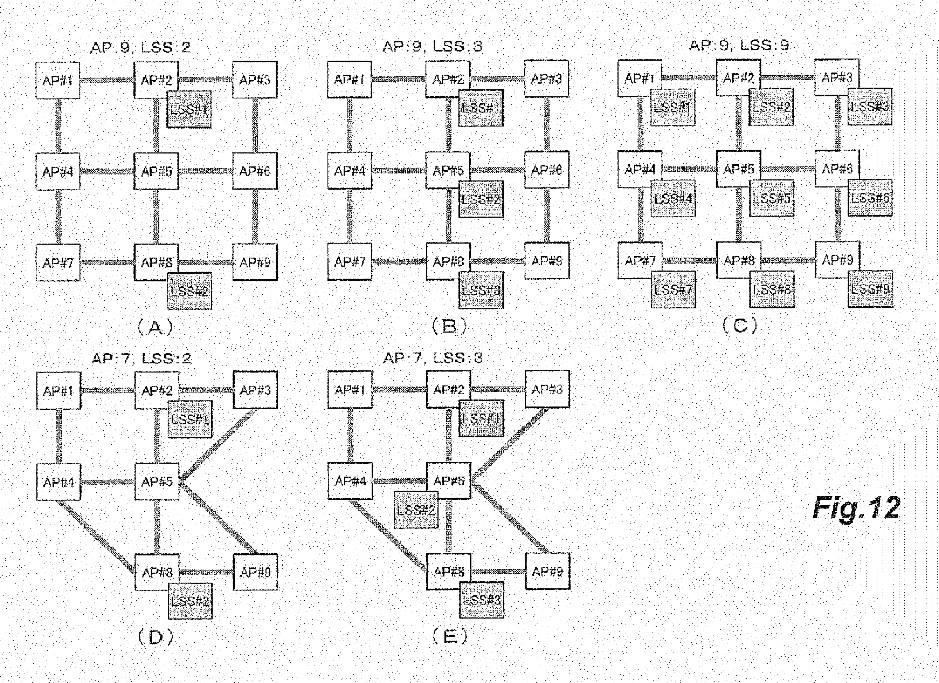

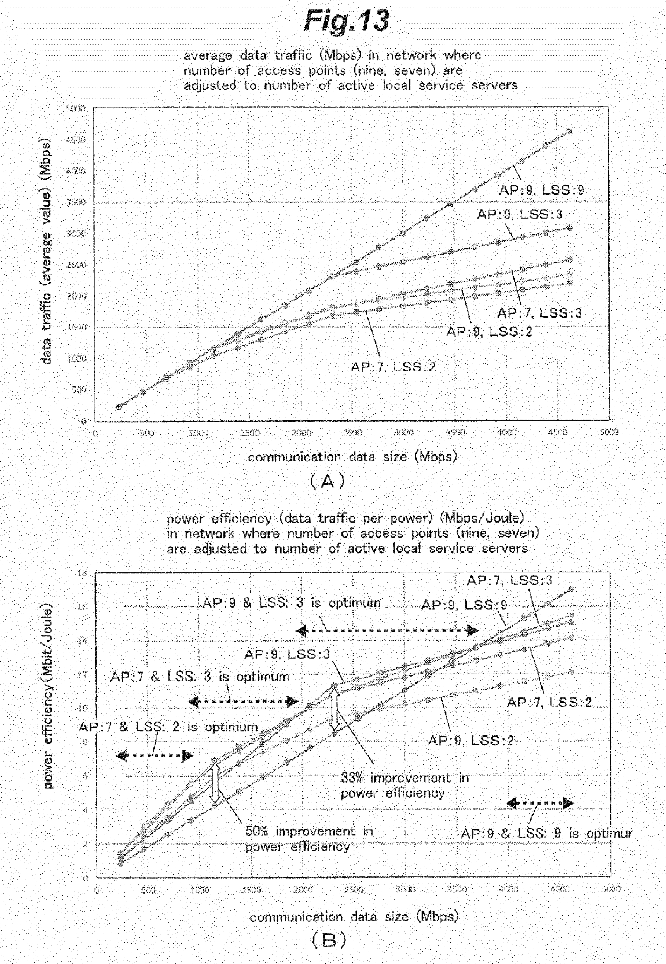

Next, an example of the configuration of the target network (where the number of access points 2 is reduced from 9 to 7) will be described in the following. FIG. 12 is an explanatory diagram showing an example of the configuration of the target network. FIG. 13 is a graph showing an example of data traffic and power efficiency in regards to the configuration shown in FIG. 12.

In the example shown in FIG. 12, nine access points 2 (AP) are provided in the target network (backhaul lines). Also, in the example shown in FIG. 12(A), two local service servers 3 (LSS) are activated. In the example shown in FIG. 12(B), three local service servers 3 are activated. In the example shown in FIG. 12(C), all of the local service servers 3 that are connected to the nine access points 2 are activated. In the examples shown in FIGS. 12(D) and 12(E), the number of active access points 2 is seven, reduced by two from the examples shown in FIGS. 12(A) and 12(B).

The horizontal axis and vertical axis of the graph shown in FIG. 13(A) respectively represent the communication data size (Mbps) and the average value (Mbps) of the data traffic (total value of communication speed) over the entire target network as in the example shown in FIG. 13(A).

From this graph, it can be seen that reducing the number of active access points 2 and local service servers 3 also reduces the data traffic (total value of communication speed) of the entire target network.

Meanwhile, the horizontal and vertical axes of the graph shown in FIG. 13(B) respectively represent the communication data size (Mbps) and the power efficiency (Mbit/Joule) of the entire target network (backhaul lines) as in the example shown in FIG. 13(B).

From this graph, it can be seen that there are ranges in which the power efficiency is optimized when the number of access points 2 is seven, and the number of local service servers 3 is two, when the number of local service servers 3 is seven, and the number of local service servers 3 is three, when the number of local service servers 3 is nine, and the number of local service servers 3 is three, and when the number of local service servers 3 is nine, and the number of local service servers 3 is nine. Thus, the optimum numbers of access points 2 and active local service servers 3 depends on the communication data size. Therefore, the power efficiency of the entire target network can be improved by using a control action that activates suitable numbers of access points 2 and local service servers 3 depending on the communication speed (communication data size) that is actually used.

In addition, when the number of active access points 2 is seven and the number of active local service servers 3 is three, as compared to the maximum configuration in which the number of active access points 2 is nine and the number of active local service servers 3 is nine, the power efficiency of the entire target network can be improved by 50%. Also, when the number of active access points 2 is nine and the number of active local service servers 3 is three, the power efficiency of the entire target network can be improved by 33% compared to the case of the maximum configuration.

As described above, in this embodiment, in order to improve the power efficiency of the entire target network (backhaul lines) in the route control of the target network, the network control server 4 controls the communication routes between the user terminal 5 and the local service servers 3, as well as the activation / deactivation of the existing access points 2 and the activation / deactivation of the existing local service servers 3. As a result, a communication route connecting the user terminals 5 and the local service servers 3 can be appropriately selected so that the communication speed of the terminal can be improved, and the power consumption of the entire system can be reduced.

In this embodiment, the arrangement of the access points 2 and the local service servers 3 is optimized by controlling the operating status of the access points 2 and the local service servers 3 during the operation of the wireless network system 1. At the same time, in addition to when operating such a wireless network system 1, the present invention can be applied to the optimization of the arrangement of the local service servers 3 when constructing a wireless network system 1. More specifically, when initially installing local service servers 3, the present invention can be applied to determine the arrangement of local service servers 3 so as to optimize the electric power efficiency of the entire network. This process can be performed by the network control server 4, but may also be performed by an appropriate information processing device other than the network control server 4.

The present invention has been described in terms of a specific embodiment, but the present invention is not limited by such an embodiment, and modification, substitution, addition, and omission can be made. The various components discussed in conjunction with the foregoing embodiment can be combined into other new embodiments.

INDUSTRIAL APPLICABILITY

The network control device, the network control system, the network control method, and the wireless network system construction method for controlling communication routes are useful in a "local production for local consumption" network that includes back haul lines formed by wireless multi-hop communication containing a plurality of base stations and a local service server as a network control device, a network control system, a network control method, and a wireless network system construction method for controlling communication routes in the network by improving the communication speeds of the terminals, and reducing the power consumption of the entire system or improving the power efficiency of wireless communication by appropriately selecting the communication routes between the user terminals and the local service servers.

LIST OF REFERENCE NUMERALS

| | | | | |
|---|---|---|---|---|
| 1 | wireless network system (network control system) | | | |
| 2 | access point (base station) | 3 | local service server | |
| 4 | network control server (network control device) | | | |
| 5 | user terminal | 11 | core network | |
| 12 | The Internet | 21 | communication device | |
| 22 | memory | 23 | processor | |

**Claims**

1. A network control device for a network including a plurality of local service servers, and backhaul lines formed by wireless multi-hop communication between a plurality of base stations, the network control device being provided with a processor for executing a process for controlling a communication route between user terminals and the local service servers,

    wherein the processor is configured
    to collect information regarding the user terminals, the base stations, and the local service servers,
    to set communication routes between the user terminals and the local service servers, groups of the base stations, those of the existing base stations that are active, and those of the existing local service servers that are active so as to optimize a power efficiency of the overall network according to the collected information, and
    to notify the base stations, the local service servers or the user terminals of route information regarding the communication routes, and power control information that commands activation and deactivation of the base stations or the local service servers.

2. The network control device according to claim 1, wherein the processor is configured to obtain the power efficiency of the overall network based on a traffic situation in the backhaul lines.

3. A network control system, comprising the network control device, the base stations, and one or more of the local service servers according to claim 1.

4. A network control method for a network including a plurality of local service servers, and backhaul lines formed by wireless multi-hop communication between a plurality of base stations, the network control device being provided with a processor for executing a process for controlling a communication route between user terminals and the local service servers,

    wherein the processor is configured
    to collect information regarding the user terminals, the base stations, and the local service servers,
    to set communication routes between the user terminals and the local service servers, groups of the base stations, those of the existing base stations that are active, and those of the existing local service servers that are active so as to optimize a power efficiency of the overall network according to the collected information, and
    to notify the base stations, the local service servers or the user terminals of route information regarding the communication routes, and power control information that commands activation and deactivation of the base stations or the local service servers.

5. A method for constructing a wireless network system using an information processing device that executes a process for constructing a network system including backhaul lines formed by wireless multi-hop communication between a plurality of base stations, and a plurality of local service servers,
    wherein the information processing device is configured to collect information regarding the user terminals, the base stations, and the local service servers, and to set an arrangement of the local service servers so as to optimize a power efficiency of the overall network according to the collected information.

**Fig.1**

EP 4 224 910 A1

# Fig.2

EP 4 224 910 A1

# Fig.3

_4_

**network control server**

_23_

**processor**

| information collection process | traffic model generation process | route cost calculation process |

| communication route generating process | candidate route selection process | traffic estimation process |

| power efficiency calculation process | optimum route selection process | control information notification process |

_22_

**memory**

_21_

**communication device**

**core network**

_2_ **access point**

_2_ **access point**

• • •

_3_ **local service server**

_5_ **user terminal**

_5_ **user terminal**

# Fig. 4

```
executed at period T1
        │
(information collection)
        │                ST101
information collection
        │                ST102
information registration
        │                ST103
traffic model generation
        │                ST104
route cost calculation
        │
       end
```

（A）

```
executed at period T2
        │
     monitor
        │                ST111
monitor access points,
local service servers,
and backhaul lines
        │
       end
```

（B）

```
executed at period T3
        │
   update route
        │                ST121
candidate route selection
        │                ST122
traffic estimation
        │                ST123
power efficiency calculation
        │                ST124
optimum route selection
        │                ST125
control information notification
        │
       end
```

（C）

# Fig.5

```
                    ┌──────────────┐
                    │    start     │
                    └──────┬───────┘
                           │
          ┌────────────────────────────────┐
          │    read access point position   │  ST201
          └────────────────┬───────────────┘
                           │
          ┌────────────────────────────────┐
          │   read information on wireless and │  ST202
          │   electric power of access points  │
          └────────────────┬───────────────┘
                           │
          ┌────────────────────────────────┐
          │ read wireless information and position time │  ST203
          │      history each user terminal   │
          └────────────────┬───────────────┘
                           │
                           ▼◄──────────────────┐
          ┌────────────────────────────────┐   │
          │   set communication data size of │  ST204
          │ user terminal, and local service server │
          │          to be connected to       │   │
          └────────────────┬───────────────┘   │
                           │                     │
          ┌────────────────────────────────┐   │
          │  select communication route based │  ST205
          │     on metrics of routing table   │   │
          └────────────────┬───────────────┘   │
                           │                     │
          ┌────────────────────────────────┐   │
          │   calculate communication speed of │  ST206
          │       user terminal via selected   │   │
          │          communication route       │   │
          └────────────────┬───────────────┘   │
                           │                     │
          ┌────────────────────────────────┐   │
          │   calculate communication speed of │  ST207
          │       user terminal via another    │   │
          │          communication route       │   │
          └────────────────┬───────────────┘   │
                           │                     │
          ┌────────────────────────────────┐   │
          │  calculate overall power efficiency │  ST208
          │     for each communication route   │   │
          └────────────────┬───────────────┘   │
                           │          ST209      │
                           ▼                     │
                     ◄────────────►              │
                     │   end ?    │──────────────┘
                     ◄────────────►      No
                           │ Yes
          ┌────────────────────────────────┐
          │ compare time history of power efficiency │  ST210
          │      for each communication route  │
          └────────────────┬───────────────┘
                           │
                    ┌──────────────┐
                    │     end      │
                    └──────────────┘
```

# Fig.6

routing table

| element | description | application examples |
|---|---|---|
| (1) destination network | network address and net mask | user terminals, access points, local service servers, network control server, data network (Internet or the like) |
| (2) next hop | adjacent route to be transferred to | adjacent access point |
| (3) output interface | output interface of own router | port of own router |
| (4) information source | if manually set or calculated by algorithm | — |
| (5) metric | prioritizing routes | wireless quality, hop number, route cost |

Fig.7

communication route (backhaul lines)

（A－1）　　　　　　　　（A－2）　　　　　　　　（A－3）

（B－1）　　　　　　　　（B－2）　　　　　　　　（B－3）

EP 4 224 910 A1

# Fig.8

(A)

#n access points

(B-1) #m access points

|      | AP#1 | AP#2 | AP#3 | AP#4 | AP#5 | AP#6 |
|------|------|------|------|------|------|------|
| AP#1 | 0    | 2    | 12   | 1.8  | 3.7  | 0    |
| AP#2 | 2    | 0    | 2    | 3.7  | 1.8  | 3.7  |
| AP#3 | 12   | 2    | 0    | 0    | 3.7  | 1.8  |
| AP#4 | 1.8  | 3.7  | 0    | 0    | 2    | 12   |
| AP#5 | 3.7  | 1.8  | 3.7  | 2    | 0    | 2    |
| AP#6 | 0    | 3.7  | 1.8  | 12   | 2    | 0    |

#n access points

(B-2) #m access points

|      | AP#1 | AP#2 | AP#3 | AP#4 | AP#5 | AP#6 |
|------|------|------|------|------|------|------|
| AP#1 | 0    | 2    | 0    | 1.8  | 0    | 0    |
| AP#2 | 2    | 0    | 2    | 0    | 1.8  | 0    |
| AP#3 | 0    | 2    | 0    | 0    |      | 1.8  |
| AP#4 | 1.8  | 0    | 0    | 0    | 2    | 0    |
| AP#5 | 0    | 1.8  | 0    | 2    | 0    | 2    |
| AP#6 | 0    | 0    | 1.8  | 0    | 2    | 0    |

# Fig.9

━━━━ communication route (backhaul lines)

(A−1)

(A−2)

(B)

# Fig.10

average data traffic (Mbps) in network
where number of access points (six) are
adjusted to number of active local service servers

(A)

power efficiency (data traffic per power)(Mbps/Joule)
in network where number of access points (six)
are adjusted to number of active local service servers

(B)

# Fig.11

average data traffic (Mbps) in network where
number of access points (nine) are
adjusted to number of active local service servers

communication data size (Mbps)

(A)

power efficiency (data traffic per power) (Mbps/Joule)
in network where number of access points (nine)
are adjusted to number of active local service servers

communication data size (Mbps)

(B)

AP:9, LSS:2

AP#1 — AP#2 — AP#3
LSS#1
AP#4 — AP#5 — AP#6
AP#7 — AP#8 — AP#9
LSS#2

(A)

AP:9, LSS:3

AP#1 — AP#2 — AP#3
LSS#1
AP#4 — AP#5 — AP#6
LSS#2
AP#7 — AP#8 — AP#9
LSS#3

(B)

AP:9, LSS:9

AP#1 — AP#2 — AP#3
LSS#1   LSS#2   LSS#3
AP#4 — AP#5 — AP#6
LSS#4   LSS#5   LSS#6
AP#7 — AP#8 — AP#9
LSS#7   LSS#8   LSS#9

(C)

AP:7, LSS:2

AP#1 — AP#2 — AP#3
LSS#1
AP#4 — AP#5
AP#8 — AP#9
LSS#2

(D)

AP:7, LSS:3

AP#1 — AP#2 — AP#3
LSS#1
AP#4 — AP#5
LSS#2
AP#8 — AP#9
LSS#3

(E)

**Fig.12**

# Fig.13

average data traffic (Mbps) in network where
number of access points (nine, seven) are
adjusted to number of active local service servers

communication data size (Mbps)

(A)

power efficiency (data traffic per power) (Mbps/Joule)
in network where number of access points (nine, seven)
are adjusted to number of active local service servers

communication data size (Mbps)

(B)

## INTERNATIONAL SEARCH REPORT

| | International application No. |
|---|---|
| | PCT/JP2021/023863 |

**A. CLASSIFICATION OF SUBJECT MATTER**
H04W 24/02(2009.01)i; H04W 40/02(2009.01)i; H04W 52/02(2009.01)i; H04W 92/20(2009.01)i
FI: H04W24/02; H04W40/02; H04W52/02; H04W92/20 110
According to International Patent Classification (IPC) or to both national classification and IPC

**B. FIELDS SEARCHED**

Minimum documentation searched (classification system followed by classification symbols)
H04W24/02; H04W40/02; H04W52/02; H04W92/20

Documentation searched other than minimum documentation to the extent that such documents are included in the fields searched
Published examined utility model applications of Japan       1922–1996
Published unexamined utility model applications of Japan     1971–2021
Registered utility model specifications of Japan          1996–2021
Published registered utility model applications of Japan      1994–2021

Electronic data base consulted during the international search (name of data base and, where practicable, search terms used)



**C. DOCUMENTS CONSIDERED TO BE RELEVANT**

| Category* | Citation of document, with indication, where appropriate, of the relevant passages | Relevant to claim No. |
|---|---|---|
| A | JP 2018-516499 A (NOKIA SOLUTIONS AND NETWORKS OY) 21 June 2018 (2018-06-21) paragraphs [0028]-[0033], [0044]-[0067], [0137]-[0177], fig. 2, 3 | 1–5 |
| A | JP 2010-148088 A (ELECTRONICS AND TELECOMMUNICATIONS RESEARCH INSTITUTE) 01 July 2010 (2010-07-01) entire text, all drawings | 1–5 |
| A | JP 2019-511177 A (HUAWEI TECHNOLOGIES CO., LTD.) 18 April 2019 (2019-04-18) entire text, all drawings | 1–5 |
| A | JP 2008-533848 A (INTERDIGITAL TECHNOLOGY CORP.) 21 August 2008 (2008-08-21) entire text, all drawings | 1–5 |

☐ Further documents are listed in the continuation of Box C.      ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09 September 2021 (09.09.2021) | 21 September 2021 (21.09.2021) |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**
Information on patent family members

International application No.

PCT/JP2021/023863

| Patent Documents referred in the Report | Publication Date | Patent Family | Publication Date |
|---|---|---|---|
| JP 2018-516499 A | 21 Jun. 2018 | WO 2016/168603 A1<br>paragraphs [0054]-[0060], [0072]-[0109], [0189]-[0254], fig. 2, 3<br>KR 10-2018-0008489 A<br>CN 107873126 A<br>US 2018/0302807 A1 | |
| JP 2010-148088 A | 01 Jul. 2010 | US 2010/0157827 A1<br>entire text, all drawings<br>KR 10-2010-0070565 A | |
| JP 2019-511177 A | 18 Apr. 2019 | EP 3432619 A1<br>entire text, all drawings<br>WO 2017/173587 A1<br>CN 108886679 A1<br>US 2019/0037474 A1 | |
| JP 2008-533848 A | 21 Aug. 2008 | WO 2006/099134 A2<br>entire text, all drawings<br>DE 202006003827 U1<br>KR 10-2006-0099470 A<br>US 2006/0253735 A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018096839 A